Europäisches Patentamt

European Patent Office

Office européen des brevets

(11) Veröffentlichungsnummer: **0 067 309**
**B1**

# (12) EUROPÄISCHE PATENTSCHRIFT

(45) Veröffentlichungstag der Patentschrift:
**19.06.85**

(21) Anmeldenummer: **82104101.9**

(22) Anmeldetag: **12.05.82**

(51) Int. Cl.⁴: **B 28 B 13/02,** B 28 C 1/18

(54) **Verfahren und Vorrichtung zur Wiederverwendung der Pressmasse aus einer Presse kommender Ausschussformlinge, insbesondere Ausschusssteine.**

(30) Priorität: **16.06.81 DE 3123856**

(43) Veröffentlichungstag der Anmeldung:
**22.12.82 Patentblatt 82/51**

(45) Bekanntmachung des Hinweises auf die Patenterteilung:
**19.06.85 Patentblatt 85/25**

(84) Benannte Vertragsstaaten:
**AT CH DE IT LI**

(56) Entgegenhaltungen:
**DE - A - 2 824 547**
**DE - C - 968 438**
**GB - A - 1 448 265**

(73) Patentinhaber: **Laeis-Werke AG, Ostallee 3-5,**
**D-5500 Trier (DE)**

(72) Erfinder: **Wollscheid, Heinz-Peter, Ing.grad., im**
**Hainbruch 5, D-5501 Gusterath (DE)**

(74) Vertreter: **Pfeiffer, Helmut, Jagenberg AG Patentwesen**
**Himmelgeister Strasse 107 Postfach 1123,**
**D-4000 Düsseldorf 1 (DE)**

**Beschreibung**

Die Erfindung betrifft ein Verfahren und eine Vorrichtung zur Wiederverwendung der Preßmasse aus einer Presse kommender keramischer Ausschußformlinge, insbesondere Ausschußsteine.

Es sind Produktionsverfahren und -anlagen zur Herstellung von Formlingen, insbesondere von Formsteinen, bekannt, bei denen die aufbereitete Formmasse in vorbestimmter Zusammensetzung bezüglich Kornverteilung, spezifischem Volumen, Feuchtigkeitsgehalt usw. einer Presse zugeführt und in dieser zu grünen Preßlingen des gewünschten Formates gepreßt wird. Danach werden diese Preßlinge z. B. von einem Setzautomaten auf Ofenwagen oder Temperplatten gestapelt und so einem Ofen zum Trocknen und weiter zum Brennen zugeführt.

Bei den bekannten Verfahren erfolgt innerhalb der Presse über eine automatische digitale Steindickenmeßeinrichtung oder über eine automatische Füllhöhenregeleinrichtung eine Ausschußmeldung. Mit Hilfe dieser Pressenzusatzeinrichtungen erhält die Pressensteuerung den erforderlichen elektrischen Impuls zur Ausschußmeldung. Hiernach werden die Ausschußformlinge manuell oder von einem Setzautomaten ausgesondert und in Kübeln gesammelt. Diese Kübel werden über längere Transportwege zu Brechern oder Kollergängen einer zentralen Materialaufbereitungsanlage, in denen die Preßlinge zerkleinert werden, gefördert. Bei der Vielzahl unterschiedlicher, in der Praxis oft kurz hintereinander wechselnder Formlingsmischungen, ist dies mit einer Zwischenlagerung verbunden, die zu unerwünschtere Aushärtung bzw. zum Abbinden der Preßlinge führt. Dadurch werden bei Zugabe des aus den zerkleinerten Preßlingen gewonnenen Granulats zu der zu pressenden Formmasse die keramischen Eigenschaften der Preßlinge nachteilig verändert.

Mit bekannten Zerkleinerungseinrichtungen ist ein Zerkleinern unmittelbar im Anschluß an das Pressen oder während des Betriebs der Presse mindestens kurzzeitig im Preßtakt, also entsprechend der Pressenleistung, nicht möglich. Das ist aber erforderlich, da in der Praxis bedingt durch unterschiedliche Chargenmischungen oft mehrere Ausschußpressungen hintereinander auftreten.

Hammermühlen neigen dazu, durch ihre Wirkungsweise das Korn zu zertrümmern und je nach Bindemittel, wie z. B. Teer, Pech der Siebrost zuzusetzen. Brecher sind zu aufwendig und für teergebundene Mischungen nicht geeignet. Wie Müllschlucker arbeitende Zerkleinerungssysteme brechen zwar Ecken und Kanten bis zu einer zylindrischen Form der Preßlinge, erreichen aber durch rollende Bewegungen keine kontinuierliche Zerkleinerung.

Aufgabe der Erfindung ist es, die Wiederverwendung der Preßmasse von aus einer Presse kommenden Ausschußformlingen zu ermöglichen, ohne daß die keramischen Eigenschaften der Preßlinge, denen die wiederverwendete Masse beigemischt ist, nachteilig verändert sind. Dabei sollen die Preßlinge nur soweit zerkleinert werden, daß das keramische Bindemittel als Granulatumhüllung erhalten bleibt. Weiterhin soll das Verfahren in unmittelbarem Anschluß an das Pressen und zugleich mit dem Pressen kontinuierlich durchführbar sein, so daß auch bei kurz aufeinander folgenden Wechsel der Chargenmischungen stets das Granulat der Ausschußformlinge noch vollständig wiederverwendet werden kann. Der Anteil des der zu pressenden Formmasse zuzugebenden wiederverwendeten Granulats soll einstellbar sein und es soll eine gute Durchmischung von Formmasse und Granulat vor dem Einführen in den Füllkasten der Presse erfolgen. Es soll also an jeder Presse durch unmittelbarer Wiederverwendung der Ausschußformlinge eine Rohstoff-, Bindemittel- und Energieeinsparung erreicht werden.

Die zur Lösung der gestellten Aufgabe gemäß der Erfindung notwendigen Merkmale sind im Anspruch 1 bzw. Anspruch 6 genannt. Die Unteransprüche nennen weitere Ausgestaltungen des Verfahrens und der Vorrichtung der Erfindung.

Die Zeichnung zeigt in

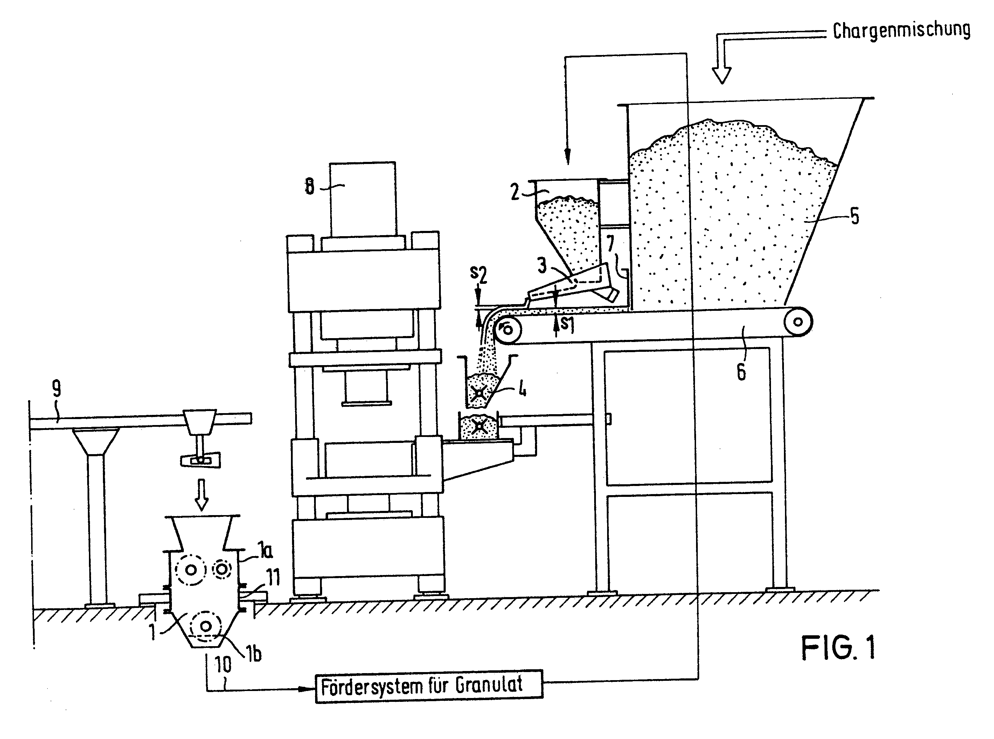

Fig. 1 eine Ausführungsform einer Einrichtung zum Ausführen des neuen Verfahrens an einer Steinpresse in schematischer Seitenansicht und in

Fig. 2 den im Verfahren eingesetzten Granulator im lotrechten Schnitt.

Der bekannten Steinpresse 8 ist ein Beschickungsbunker 5 vorgeschaltet und ein Setzautomat 9 nachgeschaltet. Unter dem Setzautomaten 9 ist der Granulator 1 mit Vorzerkleinerer 1a und Feinzerkleinerer 1b und zwischengeschaltetem Zwischenrahmen 11 angeordnet. Durch Klappen in diesem Zwischenrahmen ist eine Inspektion und ein leichtes Auswechseln verschleißanfälliger Teile möglich. Der Granulataustritt des Granulators 1 ist über einen Förderer 10 mit dem dem Beschickungsbunker 5 vorgeschalteten Vorbunker 2 verbunden. Dieser Vorbunker ist in seiner Größe mindestens so bemessen, daß er den gesamten Ausschuß einer Charge aufnehmen kann. Aus dem Beschickungsbunker 5 wird die Formmasse durch ein Förderband 6 in durch den Schieber 7 einstellbarer Schichthöhe $S_1$ gefördert. Auf diese Schicht wird das Granulat aus dem Vorbunker 2 in der Schichthöhe $S_2$ durch eine Vibrationsrinne 3 aufgegeben. Diese Aufgabe kann auch durch ein drehzahlgeregeltes Abzugsband oder durch eine Zellenschleuse erfolgen. Von dem Förderband 6 gelangt die Formmasse und das Granulat in einen Füllschieber-Vorbunker 4, in dem Formmasse und Granulat miteinander vermischt werden. Aus dem Füllschieber-Vorbunker gelangt das Gemisch in den Füllkasten der Presse 8.

Die Wirkungsweise des neuen Verfahrens ist folgende:

Sobald die Pressenzusatzeinrichtung Ausschuß festgestellt hat, bleibt ein Übersetzgreifer des Setzautomaten 9 in Abwurfstellung über dem Granulator stehen und wirft die Preßlinge in den Einwurftrichter des Granulators, dessen Form ein zwangsläufiges Zubringen der Ausschußsteine in den Wirkbereich der Brechsterne der Vorzerkleinerungseinrichtung 1a gewährleistet. In ihr ist die Hauptantriebswelle 13 mit den Brechsternen 14 direkt bestückt. Die Form der Brechsterne mit Doppelzinken 15, 16 unterschiedlicher Länge und die Anordnung der Brechsterne versetzt zueinander begünstigt das sichere Erfassen der Preßlinge bei optimaler Ausnutzung der Antriebsleistung, auch beim Einwurf von mehreren Steinen gleichzeitig. Durch die versetzte Anordnung der Brechsterne 14 auf der Welle 13 werden die Preßlinge unabhängig von ihrer Einwurflage stets sicher erfaßt. Die mit gleicher Drehzahl gegenläufige Druckwalze 17, die über Stirnräder angetrieben ist, und die mit pyramidenförmigen Vorsprüngen 18 über den gesamten Umfang verteilt versehen ist, verhindert ein Zurückrutschen der eingeworfenen Steine. Brechsterne und Druckwalze drücken die eingeworfenen Steine auf einen massiven Zerkleinerungsrost 19. Die Abstände A, C der Antriebs- und Druckwalze voneinander und von dem dazwischen liegenden Zerkleinerungsrost 19 sind so gewählt, daß ein kontinuierlicher Zerkleinerungsvorgang gewährleistet ist und z. B. 50—60 mm große Steinstücke entstehen. Der mit $D_1$ bezeichnete Umfangskreis des längsten Zinkens 16 tangiert den Umfangskreis $D_2$ der Vorsprünge 18, so daß ein Zurückrutschen der Preßlinge aus dem Eingriff der Brechsterne unmöglich ist.

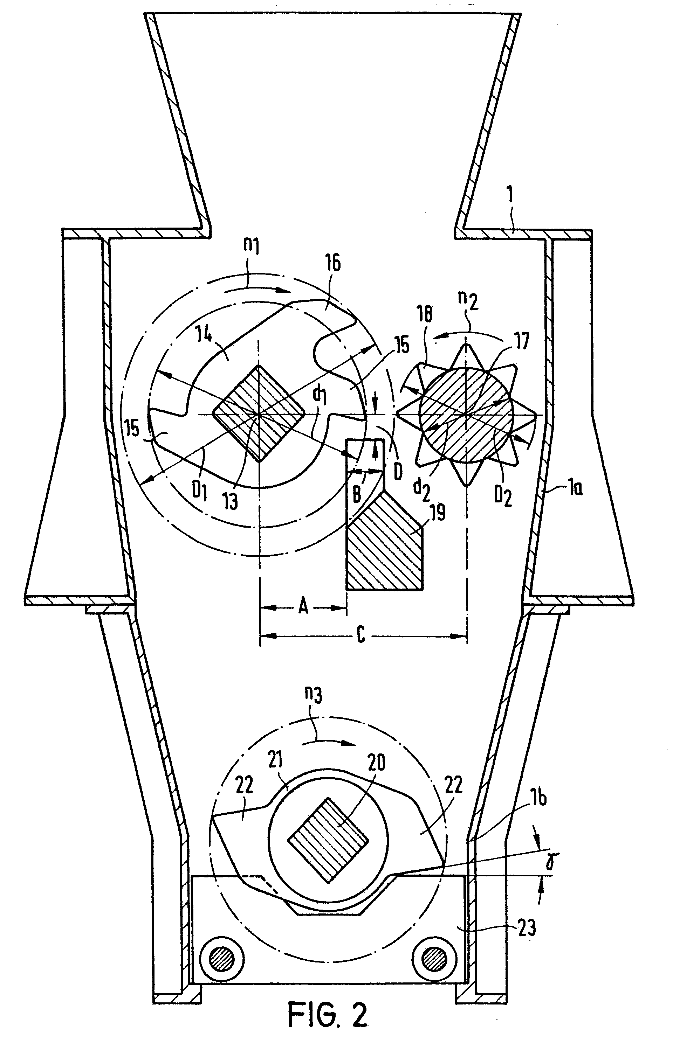

In Fig. 2 ist mit $d_1$ der Umfangskreis der Zinken 15 und mit $d_2$ der Durchmesser der Druckwalze 17 bezeichnet. Mit B ist die Breite des Rostes 19 im Bereich des Durchtritts der Zinken 15, 16 und mit D der Abstand der Oberkante des Rostes 19 von den auf gleicher Höhe liegenden Achsen der Wellen 13 und 17 bezeichnet. Mit $n_1$, $n_2$ und $n_3$ sind die Drehzahlen der einzelnen Wellen und mit den zugehörigen eingezeichneten Pfeilen deren Drehrichtung angegeben. Durch entsprechende Wahl der vorstehend angegebenen Maße A, B, C, D, $D_1$, $D_2$ und $d_1$, $d_2$ sowie der Drehzahlen $n_1$, $n_2$ und $n_3$ wird erreicht, daß für alle marktüblichen Steinformate ein kontinuierlicher Zerkleinerungsprozeß möglich wird.

In der Feinzerkleinerungseinrichtung 1b übernimmt eine separat angeordnete Welle 20, bestückt mit Brechsternen 21 aus verschleißfestem Blech, die weitere Zerkleinerung auf 8—16 mm. Die Zinken 22 der Blechsterne 21 drehen sich durch einen Spaltrost 23 und zerkleinern somit zwangsläufig die vorzerkleinerten Steinstücke zu Granulat. Je nach Sinterkorngröße kann für jeden Einsatzfall der axiale Spalt im Spaltrost 23 festgelegt werden. Durch besondere Form der Zinken 22 mit negativer Schneidkante wird bei Verschleiß oder sonstiger Beschädigung ein Verhaken der Zinken verhindert. Der negative Schneidwinkel der Schneidkante ist in Fig. 2 durch den Winkel $\gamma$ gekennzeichnet.

Je nach Neigung der Preßmasse zum Ankleben, besonders bei teergebundenen Massen, ist ein Öleinsprühsystem am Gehäuse vorhanden.

Die Vor- und Feinzerkleinerungswellen werden elektrisch oder über Ölmotoren und Hydraulikpumpen angetrieben. Eine variable Einstellung ihrer Drehzahlen ist durch Regler möglich. Damit wird eine Anpassung der Zerkleinerungsleistung an die Pressenleistung erreicht, was für kurze Zeit erforderlich sein kann. Die Drehzahl der Welle 20 des Feinzerkleinerers wird stets so eingestellt, daß kein Massestau im Zwischenraum zwischen der Vor- und Feinzerkleinerungseinrichtung 1a, 1b eintritt.

Durch eingestellte Druckbegrenzungsventile an den Wellen ist eine Überlast auch bei Einfallen von Matallteile, wie z. B. Schrauben, nicht möglich. Blockiert eine Zerkleinerungsstufe, so wird ein Druckschalter in Verbindung mit einem Zeitrelais Signal geben, welches einen Pressenstop auslösen kann.

Von dem Steinzerkleinerer 1 wird das Granulat mit dem Fördersystem 10 in den kleinen Vorbunker 2 transportiert. Auch dem Beschickungsbunker 5 erfolgt die kontinuierliche Massezuführung in den Füllschieber-Vorbunker 4 durch das Transportband 6. Am Auslauf des Beschickungsbunkers 5 wird der gewünschte Massefluß durch den Auslaufschieber 7 in gewünschter Schichtdicke auf dem Förderband 6 eingestellt. Die Feindosierung übernimmt eine Vibrationsrinne 3, deren Förderleistung einstellbar ist. Dadurch wird auf die auf dem Förderband liegende Formmasseschicht eine dünne gleichmäßige verteilte Schicht Granulat aufgetragen. Durch Rührwerke im Füllschieber-Vorbunker 4 sowie ggf. auch im Füllkasten der Presse erfolgt ein weiterer Mischvorgang, so daß das Granulat gleichmäßig über das gesamte Einfüllvolumen verteilt wird. Der Vorbunker 2 tritt immer dann in Funktion, wenn kurzzeitig einige Ausschußsteine hintereinander zerkleinert werden müssen. Die Dosierung zur Hauptpreßmasse darf nur feinfühlig erfolgen, damit der prozentuale Anteil an Granulat, bezogen auf den größeren Teil der Formmasse, konstant bleibt.

Die Anordnung des Granulators im Bereich des Setzautomaten und des Vorbunkers zwischen Beschickungsbunker und Füllkasten der Presse ermöglicht eine besonders raumsparende Ausbildung, insbesondere mit kleiner Aufstellfläche für die Gesamtanlage, bei der die einzelnen Bauteile integriert werden können.

## Patentansprüche

1. Verfahren zur Wiederverwendung der Preßmasse aus einer Presse kommender keramischer Ausschußformlinge, insbesondere Ausschußsteine, gekennzeichnet durch nachstehende, sich unmittelbar an das Pressen anschließende, ggf. zugleich mit dem Pressen stattfindende Verfahrensstufen:

a) aufgrund einer Ausschußmeldung werden die Ausschußformlinge von einem Übersetzgreifer eines der Presse (8) nachgeordneten Formlingsetzautomaten(9) in einen Granulator (1) gefördert,

b) im Granulator (1) erfolgt eine Zerkleinerung der Formlinge in zwei Stufen zunächst auf z. B. 50—60 mm Durchmesser, danach auf Sinterkorngröße von z. B. 8—16 mm Durchmesser, bei der die keramischen Bindemittel als Kornumhüllung des Granulats erhalten bleiben,

c) das aus dem Granulator (1) kommende Granulat wird einem dem Beschickungsbunker (5) der Presse (8) vorgeschalteten Vorbunker (2) zugeführt,

d) das Granulat aus dem Vorbunker (2) wird in dosierter, einstellbarer Menge der auf einem Förderer (6) aus dem Beschickungsbunker (5) kommenden Preßmasse zugegeben und beides in einen Füllschieber-Vorbunker (4) gefördert,

e) im Füllschieber-Vorbunker (4) erfolgt eine Mischung von Preßmasse aus dem Beschikkungsbunker (5) und Granulat aus dem Vorbunker (2),

f) das Gemisch aus dem Füllschieber-Vorbunker (4) wird dem Füllkasten der Presse (8) und anschließend der Presse (8) zum Verpressen zugeführt.

2. Verfahren nach Anspruch 1, dadurch gekennzeichnet, daß die Zerkleinerung im Granulator (1) im Takt der Presse (8) erfolgt und die Zerkleinerungsleistung an die Pressenleistung anpaßbar ist.

3. Verfahren nach einem der Ansprüche 1 oder 2, dadurch gekennzeichnet, daß während des Granulierens in den Granulator (1) Öl mindestens von Zeit zu Zeit eingesprüht wird.

4. Verfahren nach einem der Ansprüche 1 bis 3, dadurch gekennzeichnet, daß der aus dem Beschickungsbunker (5) auf einem Förderband (6) ankommenden Formmasse das Granulat aus dem Vorbunker (2) gleichmäßig über die Breite des Förderbandes (6) verteilt zugegeben wird.

5. Verfahren nach einem der Ansprüche 1 bis 4, dadurch gekennzeichnet, daß beim Blockieren einer Zerkleinerungsstufe des Granulators (1) die Presse (8) angehalten wird.

6. Einrichtung zur Ausführung des Verfahrens nach einem der Ansprüche 1 bis 5, bestehend aus einer Presse mit vorgeschaltetem Beschikkungsbunker (5) und nachgeschaltetem Formlingsetzautomat (9) sowie mit einer Pressenzusatzeinrichtung zur Ausschußmeldung, z. B. einer Füllhöhenregeleinrichtung oder einer Steindickenmeßeinrichtung, gekennzeichnet durch einen zweistufigen Granulator (1) im Bereich des Setzautomaten (9), dessen Granulataustritt über einen Förderer (10) mit einem dem Beschikkungsbunker (5) der Presse (8) vorgeschalteten Vorbunker (2) verbunden ist und durch einen dem Vorbunker (2) nachgeordneten Dosierer (3) zur Aufgabe des Granulats aus dem Vorbunker (2) auf die auf einem Förderer (6) aus dem Beschickungsvorgang (5) kommende Formmasse und durch einen dem Förderer (6) nachgeschalteten Füllschieber-Vorbunker (4) mit einer Mischvorrichtung.

7. Einrichtung nach Anspruch 6, dadurch gekennzeichnet, daß der Granulator (1) eine Vorzerkleinerungseinrichtung (1a) aufweist, bestehend aus einer Hauptantriebswelle (13) mit darauf mit Abstand voneinander axial nebeneinander und in Umfangsrichtung versetzt zueinander angeordneten, mit mindestens einseitig mit Zinken (15, 16) unterschiedlicher Länge unmittelbar nebeneinander ausgerüsteten Brechsternen (14) und einer gegenläufig zur Hauptantriebswelle (13) mit gleicher Drehzahl umlaufenden Druckwalze (17) mit darauf mit Abstand voneinander nebeneinander und über den Umfang verteilt angeordneten pyramidenartigen Vorsprüngen (18) und einem zwischen Hauptantriebswelle (13) und Druckwalze (17) angeordneten Zerkleinerungsrost (19), durch dessen Rostspalten die Zinken (15, 16) treten können, und eine der Vorzerkleinerungseinrichtung (1a) nachgeschaltete Feinzerkleinerungseinrichtung (1b), bestehend aus einer Welle 20 mit auf ihr mit Abstand voneinander axial nebeneinander angeordneten, aus verschleißfesten Blechsegmenten mit Zinken (22) mit negativer Schneidkante bestehenden Brechsternen (21), denen ein Spaltrost (23) so zugeordnet ist, daß bei Drehung der Welle die Zinken (22) der Brechsterne (21) durch die Rostspalten des Spaltrosts (23) treten können.

8. Einrichtung nach Anspruch 7, dadurch gekennzeichnet, daß der axiale Spalt im Rost der Feinzerkleinerungseinrichtung (1b) ein- und feststellbar ist.

9. Einrichtung nach einem der Ansprüche 7 oder 8, dadurch gekennzeichnet, daß zwischen Vor- und Feinzerkleinerungseinrichtung ein Zwischenraum (11) mit durch Klappen verschlossenen Inspektionsöffnungen angeordnet ist.

10. Einrichtung nach einem der Ansprüche 6 bis 9, dadurch gekennzeichnet, daß dem Vorbunker (2) eine ggf. um die lotrechte Achse schwenkbare Vibrationsrinne (3) mit einstellbarer Förderleistung oberhalb des Förderbandes (6) nachgeschaltet ist.

**Claims**

1. Process for reusing the moulding material of ceramic reject mouldings, in particular reject bricks, coming out of the press, characterised by the following process steps which take place immediately after the pressing or at the same time as the pressing:

a) in response to a reject message, the reject mouldings are conveyed by a transmission gripper of a moulding-positioning device (9) which is arranged downstream of the press (8), into a granulator (1),

b) in the granulator (1) the mouldings are comminuted in two stages, first of all to, for ex ample, 50—60 mm in diameter and then to sinter grain size of, for example, 8—16 mm in diameter where the ceramic binder is preserved as a sheath surrounding the granules,

c) the granulate coming out of the granulator (1) is fed to a prebunker (2) upstream of the charge bunker (5) of the press (8),

d) the granulate is added out of the prebunker (2) in a metered, adjustable amount to the moulding material coming ut of the charge bunker (5) along a conveyor (6), and both are conveyed into a loading slide prebunker (4),

e) in the loading slide prebunker (4), moulding material out of the charge bunker (5) is mixed with the granulate out of the prebunker (2),

f) the mixture in the loading slide prebunker (4) is passed to the load box of the press (8) and then to the press (8) for pressing.

2. Process according to Claim 1, characterised in that the comminution in the granulator (1) takes place in time with the press (8) and the comminution output is adaptable to the press output.

3. Process according to either of Claim 1 or 2, characterised in that, during granulating in the granulator (1), oil is sprayed in at least from time to time.

4. Process according to any one of Claims 1 to 3, characterised in that the moulding material arriving from the charge bunker (5) on a conveyor belt (6) has added to it the granulate out of the prebunker (2) in a uniform distribution across the width of the conveyor belt (6).

5. Process according to any one of Claims 1 to 4, characterised in that if a comminution stage of the granulator (1) becomes blocked the press (8) is stopped.

6. Apparatus for implementing the process according to any one of Claims 1 to 5, comprising a press with upstream charge bunker (5) and downstream moulding-positioning device (9) and with a press accessory for the reject message, for example a load level regulator or a brick thickness measurer, characterised by a two-stage granulator (1) which is within the range of the positioning device (9) and whose granulate outlet is connected via a conveyor (10) to a prebunker (2) connected upstream of the charge bunker (5) of the press (8) and by a metering means (3) which is downstream of the prebunker (2), for adding the granulate out of the prebunker (2) to the moulding material coming out of the charge process (5) along a conveyor (6), and by a load slide prebunker (4) which is downstream of the conveyor (6) and incorporates a mixing device.

7. Apparatus according to Claim 6, characterised in that the granulator (1) has a precomminution means (1a) comprising a main drive shaft (13) on which are arranged spaced breaking stars (14) which are axially adjacent and circumferentially off-set to one another and are equipped on at least one side with teeth (15, 16) of varying lengths which are immediately adjacent to one another, and a pressure roller (17) which rotates at the same speed as the main drive shaft (13) in the opposite direction thereto and has pyramidal projections (18) which are arranged thereon at a distance from one another and distributed over the circumference, and a comminution grill (19) which is arranged between the main drive shaft (13) and the pressure roller (17) and through the gaps of which the teeth (15, 16) can pass and, downstream of the precomminution means (1a), a fine-comminution means (1b) comprising a shaft 20 on which are arranged, at a distance from one another and axially adjacent, breaking stars (21) which consist of wear-resistant metal segments having teeth (22) with a negative cutting edge and with which is coordinated a cleaving grill (23) in such a way that, on rotation of the shaft, the teeth (22) of the breaking stars (21) can pass through the gaps of the cleaving grill (23).

8. Apparatus according to Claim 7, characterised in that the axial gap in the grill of the fine-comminution means (1b) is adjustable and fixable.

9. Apparatus according to either of Caims 7 or 8, characterised in that an interspace (11) having lid-sealed inspection orifices is arranged between the precomminution means and the fine-comminution means.

10. Apparatus according to any one of Claims 6 to 9, characterised in that downstream of the prebunker (2) there is arranged, above the conveyor belt (6), a vibration chute (3) which has an adjustable conveying output and which may be pivotable about the perpendicular axis.

**Revendications**

1. Procédé de réutilisation de la matière de pressage d'objets moulés de rebut en céramique sortant d'une presse, en particulier de briques de rebut, caractérisé par les étapes suivantes qui succédent directement au pressage ou qui, le cas échéant, ont lieu en même temps que ce pressage:

a) en vertu d'une notification de rebut, les objets moulés de rebut sont transférés dans un granulateur (1) par une pince de translation d'un automate de positionnement d'objets moulés qui suit la presse,

b) dans le granulateur (1) a lieu un broyage en deux étages des objets moulés tout d'abord jusqu'à une granulométrie de 50 à 60 mm, puis jusqu'à une granulométrie de frittage de par exemple 8 à 16 mm, pour laquelle les liants céramiques restent présents sous forme d'enrobage des grains du granulat,

c) le granulat sortant du granulateur (1) est admis dans une avant-trémie (2) qui précède la trémie d'alimentation (5) de la presse (8),

d) le granulat provenant de l'avant-trémie (2) est ajouté en une quantité dosée réglable à la matière de pressage sortant sur un transporteur (6) de la trémie d'alimentation (5) et les deux matières sont transférées dans une avant-trémie à registre de remplissage (4),

e) dans l'avant-trémie à registre de remplissage (4) a lieu un mélange de la matière de pressage sortant de la trémie d'alimentation (5) et du granulat provenant de l'avant-trémie (2),

f) le mélange sortant de l'avant-trémie à registre de remplissage (4) est admis dans le caisson de remplissage de la presse (8), puis dans la presse (8) en vue du pressage.

2. Procédé suivant la revendication 1, caractérisé en ce que le broyage dans le granulateur (1) s'effectue en synchronisme avec la presse (8) et la puissance de broyage peut être adaptée à la puissance de pressage.

3. Procédé suivant la revendications 1 ou 2, caractérisé en ce que pendant la granulation dans le granulateur (1), de l'huile est pulvérisée au moins de temps en temps.

4. Procédé suivant l'une quelconque des revendications 1 à 3, caractérisé en ce que la matière de moulage provenant de la trémie d'alimentation (5) sur une bande transporteuse (6) est ajoutée au granulat provenant de l'avant-trémie (2) en étant répartie uniformément sur toute la largeur de la bande transporteuse (6).

5. Procédé suivant l'une quelconque des revendications 1 à 4, caractérisé en ce que la presse (8) est immobilisée lors du blocage d'un étage de broyage du granulateur (1).

6. Dispositif pour l'exécution du procédé suivant l'une quelconque des revendications 1 à 5, formé d'une presse précédée d'une trémie d'alimentation (5) et suivie d'un automate de positionnement d'objets moulés (9) et équipée d'un dispositif auxiliaire de presse pour notifier la production de rebut, par exemple d'un dispositif de régulation de hauteur de remplissage ou d'un dispositif de mesure de l'épaisseur des briques, caractérisé par un granulateur (1) à deux étages dans la zone de l'automate de positionnement (9), dont la sortie de granulat est raccordée par l'intermédiaire d'un transporteur (10) à une avant-trémie (2) montée devant la trémie d'alimentation (5) de la presse (8) et par un doseur (3) suivant l'avant-trémie (2) pour débiter le granulat de l'avant-trémie (2) sur la matière à mouler sortant de l'opération d'alimentation (5) sur un transporteur (6) et par une avant-trémie à registre de remplissage (4) suivant le transporteur et comportant un dispositif mélangeur.

7. Dispositif suivant la revendication 6, caractérisé en ce que le granulateur (1) présente un dispositif de prébroyage (1a) formé d'un arbre d'entraînement principal (13) sur lequel sont montées des étoiles de broyage (14) espacées axialement les unes à côté des autres et décalées dans le sens circonférentiel, avec au moins d'un côté des dents (15, 16) de longueurs différentes montées directement les unes à côté des autres et d'un rouleau presseur (17) tournant dans le sens opposé à celui de l'arbre d'entraînement principal (13), à la même vitesse, présentat des sailies pyramidales (18) espacées les unes à côté des autres et réparties sur la périphérie et une grille de broyage (19) disposée entre l'arbre d'entraînement principal (13) et le rouleau presseur (17), les dents (15, 16) pouvant passer par les interstices de la grille, et un dispositif de broyxage fin (1b) disposé en aval du dispositif de prébroyage (1a) et formé d'un arbre (20) portant des étoiles de broyage (21) disposées les unes à côté des autres, espacées axialement et faites de segments de tôle résistant à l'usure qui comportent des dents (22) à arêtes de coupe négatives, auxqueles une grille à fentes (23) est associée d'une manière telle que, lors de la rotation de l'arbre, les dents (22) des étoiles de broyage (21) puissent passer à travers les fentes de la grille (23).

8. Dispositif suivant la revendication 7, caractérisé en ce que la fente axiale prévue dans la grille du dispositif de broyage fin (1b) peut être réglée et fixée.

9. Dispositif suivant l'une ou l'autre des revendications 7 et 8, caractérisé en ce qu'entre le dispositif de prébroyage et le dispositif de broyage fin est disposé un espace intermédiaire (11) présentant des ouvertures d'inspection fermées par des clapets.

10. Dispositif suivant l'une quelconque des revendications 6 à 9, caractérisé en ce qu'une goulotte vibrante (3) à débit réglable pouvant pivoter le cas échéant autour d'un axe vertical suit l'avant-trémie (2) au-dessus de la bande transporteuse (6).

FIG. 1

Chargenmischung

Fördersystem für Granulat

FIG. 2